(19) Europäisches Patentamt / European Patent Office / Office européen des brevets

(11) **EP 3 036 203 B1**

(12) **EUROPEAN PATENT SPECIFICATION**

(45) Date of publication and mention
of the grant of the patent:
**02.10.2019 Bulletin 2019/40**

(21) Application number: **14838714.5**

(22) Date of filing: **05.08.2014**

(51) Int Cl.:
*C03B 33/09* (2006.01)     *B23K 26/00* (2014.01)
*C03B 29/00* (2006.01)     *B23K 26/402* (2014.01)
*B23K 103/00* (2006.01)     *C03C 23/00* (2006.01)

(86) International application number:
**PCT/RU2014/000586**

(87) International publication number:
**WO 2015/026267 (26.02.2015 Gazette 2015/08)**

(54) **METHOD FOR BLUNTING SHARP EDGES OF GLASS OBJECTS**

VERFAHREN ZUR GLÄTTUNG SCHARFER KANTEN VON GLASGEGENSTÄNDEN

PROCÉDÉ PERMETTANT D'ARRONDIR LES BORDS ACÉRÉS D'OBJETS EN VERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.08.2013 RU 2013139383**

(43) Date of publication of application:
**29.06.2016 Bulletin 2016/26**

(73) Proprietor: **"Lascom" Ltd.
g. Dubna, Moskovskaya obl. 141983 (RU)**

(72) Inventors:
• **CHADIN, Valentin Sergeevich
Noginsky raion
Moskovskaya obl. 142440 (RU)**

• **ALIEV, Timur Alekperovich
g. Noginsk
Moskovskaya obl. 142407 (RU)**

(74) Representative: **Grosse, Wolf-Dietrich Rüdiger
Hammerstrasse 3
57072 Siegen (DE)**

(56) References cited:
| | |
|---|---|
| WO-A1-2007/094160 | JP-A- 2002 012 436 |
| KR-B1- 100 820 689 | RU-C1- 2 024 441 |
| RU-C1- 2 163 226 | RU-C1- 2 163 226 |
| US-A1- 2002 041 946 | US-B1- 6 407 360 |
| US-B2- 7 441 680 | |

## Description

Technical Field of the Invention

The invention relates to methods for processing glass objects, in particular, to methods for blunting sharp edges of glass objects. The present invention can be used in various industries involved in processing of glass for blunting edges.

Background Art

Conventional mechanical and chemical methods of processing edges of glass may lead to microcracks in the glass sheet, especially at glass edges, thereby reducing the strength of glass by an order of magnitude.

An alternative processing method is laser chamfering. Laser is characterized by a monochromatic light having a large coherence length. Lasers are employed in many industrial and medical applications. Significant technical applications of lasers include, for example, spectroscopy, laser measurement of distance, and lasers are also used in processes of precision cutting and welding of metals, ceramics and glass.

WO 03015976 A1 discloses a method of chamfering edges of a glass substrate, which comprises: treating a glass edge successively with a first focused laser beam with a low heat energy intensity, having an elliptical heat spot located at an angle relative to the glass edge, wherein when the glass substrate is moved in the feed direction, the first laser spot, after preheating the portion of the glass substrate in the vicinity of the edge, melts and chamfers the edge, and then the substrate is heated by a second laser beam having a heat spot in the shape of an ellipse elongated in the direction of movement of the glass substrate. Thereby, residual stresses are mitigated without producing small cracks. However, the method is difficult to be put in practice, and "tempering" the glass, i. e. removing thermal stresses caused by melting the glass is impossible in such a short time.

Document KR-B-100820689 discloses a method for blunting sharp edges of glass objects comprising treating the glass edges with a focused laser beam wherein a first laser spot as well as a second laser spot both have elliptic shape. A similar disclosure is known from US 6,407,306 B1 which teaches to use an elliptical focused beam not only for cutting glass objects but also for a simultaneously grinding of the edges of a cut face.

The most relevant prior art is a method of blunting sharp edges of objects, taught in RU 2163226 C1, which comprises heating at least one surface of the edge by a portion of a beam or by one of two separate beams to a temperature not exceeding the melting point of the material, and heating the other surface of the edge of the object by the other portion of the beam or by the second individual beam. The laser beam used for heating has an elliptical sectional shape on the surface of the material. Disadvantages of this method include the reduction in strength due to possible residual thermal stresses, and the likelihood of breaking off chips of the material being detached, as well as poor controllability of the process due to different distribution of the power density in each of the treatment spots, where the distribution uniformity can be only theoretical.

Disclosure of the invention

The object of the present invention is to provide a method for blunting sharp edges of glass objects, which ensures better quality products, increases the speed of processing glass objects, while providing a chamfer with a minimal required size which is constant throughout the length of treatment and increasing the strength of the products.

The object is accomplished in a method for blunting sharp edges of glass objects according to the invention, which comprises treating the glass edge with a focused laser beam having a ring-shaped section, while relatively moving the glass object and/or the beam, said treating comprising heating the glass edge with the laser beam to a temperature above glass transition temperature, $T > Tg$.

The beam having a ring-shaped section here refers to a beam produced by a coaxial lens, which transforms a beam having a solid section into a beam having a ring-shaped section. An exemplary beam transformer is an assembly consisting of two mirror cones, external and internal (referred to as "axicon").

Glass transition temperature Tg is one of the basic characteristics of polymeric materials. At a temperature below the glass transition temperature a polymeric material is in a more hard and brittle state; when this temperature is exceeded the material substantially intermittently transits to plastic state. With this, the thermal expansion coefficient of the material increases dramatically as well. The glass transition temperature is difficult to be exactly determined because of the spread characteristics of materials and the application of various techniques. For most industrial glass, Tg is within the range of 400-600°C.

In the present invention the ring-shaped section of the laser beam is a determining factor for chamfering glass objects, which prevents damage to the glass surface and chipping. First of all, it creates tempered glass areas of desired shape and size in the near-edge region due to thermal stresses in these areas, thereby providing the formation of a chamfer with rounded or blunt ends on the glass at brittle fracture.

The method according to the invention allows the creation, in the near-edge region, of hardened glass sections with thermal stresses, the magnitude and direction of which provide the formation of chamfers with rounded ends on the glass at brittle fracture.

When hardened portions are created on the sharp edge of a glass object upon heating above the glass transition temperature, chips are broken off and impair the quality. That is why according to the invention the beam having a ring-shaped section creates hardened portions in the near-edge region, while the tip of the chip stays more elastic, therefore the chip keeps its integrity during the entire process. Thereby the predetermined geometry of the chamfer is preserved and maintained.

The laser beam is preferably directed so that its axis lies at an angle of 20-70° to the plane, which is a continuation of the glass surface facing the laser beam. Beyond the lower limit the most of the beam (up to 70%) will be reflected, and conditions for chipping and chamfering will be infeasible, while above the upper limit a groove will be formed rather than a chamfer.

Preferably, said angle lies in the plane perpendicular to the vector of movement of the glass object and/or beam.

The axis of the laser beam can also be directed at an angle of 0-30° to the plane perpendicular to the vector of said movement of the glass object and/or beam.

Preferably, the treatment is carried with a laser beam having the shape of a ring elongated in the direction of the movement of said glass object and/or the beam to produce a heat spot in the shape of an elongated ring. This ensures an additional effect of introducing a greater amount of heat energy (W, watts) into the material at the optimum power density (P, watts/sq mm), thereby increasing the process efficiency.

The treatment with a laser beam preferably comprises removing the glass material in the form of chip to chamfer the glass edge, and the size of the chamfer is defined by the minor axis of the heat spot, radiation power density at the heat spot W (watts/sq cm), and exposure time $\tau$ (s).

After treating the edge of the object a coolant may be supplied to the heating area.

Other advantages and features of the invention will become apparent from the following description of preferred embodiments with reference to the accompanying drawings.

Brief Description of the Drawings

The invention will now be described in greater detail based on exemplary embodiments thereof with reference to the drawings, in which:

Fig.1 is a diagram illustrating treatment of a glass edge with a laser beam and planes defining the direction of the beam to the glass surface;
Fig.2 is a sectional view illustrating the phenomena occurring in the edge of glass treated according to the invention;
Fig.3 shows a sectional shape of a chamfer produced on the glass upon treatment in accordance with the invention;
Fig.4 illustrates thermal stresses occurring in glass treated according to the invention;
Fig.5 shows in comparative graphs which illustrate the nature of thermal cleavage occurring at different shapes of the spot;
Fig.6 shows an arrangement of lenses to produce a laser beam having an elliptical sectional shape;
Fig.7 shows optional positions of inner and outer mirror cones to produce a laser beam having a sectional shape of a ring with different ring diameters; and
Fig.8 shows an exemplary arrangement of cylindrical lenses.

Embodiments of the Invention

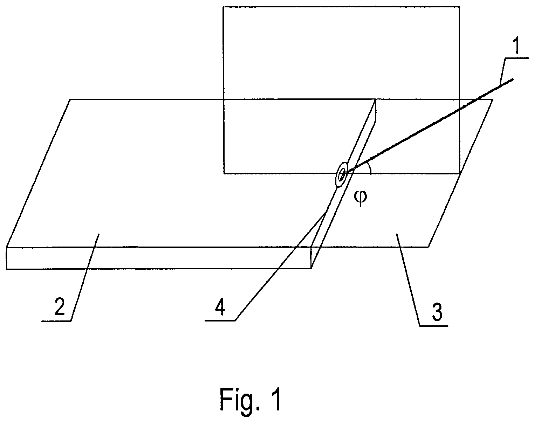

According to the invention (see Fig.1) a method of blunting sharp edges of glass objects comprises: treating an edge of glass object 1 with a focused laser beam 2 having a ring-shaped section, while relatively moving the glass object and/or the beam. The treatment with a laser beam comprises heating the glass edge 4 to a temperature above glass transition temperature, T > Tg. This causes removal of the glass material in the form of chip 3 from the edge 4 of the glass object 1 to form a chamfer.

Furthermore, as shown in Fig.1, in one embodiment the laser beam 2, whose heat spot is preferably a ring-shaped ellipse, is directed at the glass 1 edge to be chamfered at an angle to a plane 3, which is a continuation of the glass 1 surface facing the laser beam 2. Under normal conditions, the laser beam is preferably moved along the glass 1 edge in a straight line at a constant speed and constant focal distance. However, when a glass object having a shape, for example, with rounded corners is treated, the laser beam can be moved in the region of corners at a different speed and with a modified size of heat spot to maintain stable heating conditions.

In the illustrated embodiment the ring-shaped ellipse of the heat spot (shown schematically in Fig.1) has the major axis of 11 mm and the minor axis of 3 mm. The angle at which the laser beam is directed at the glass edge is 45° in this embodiment.

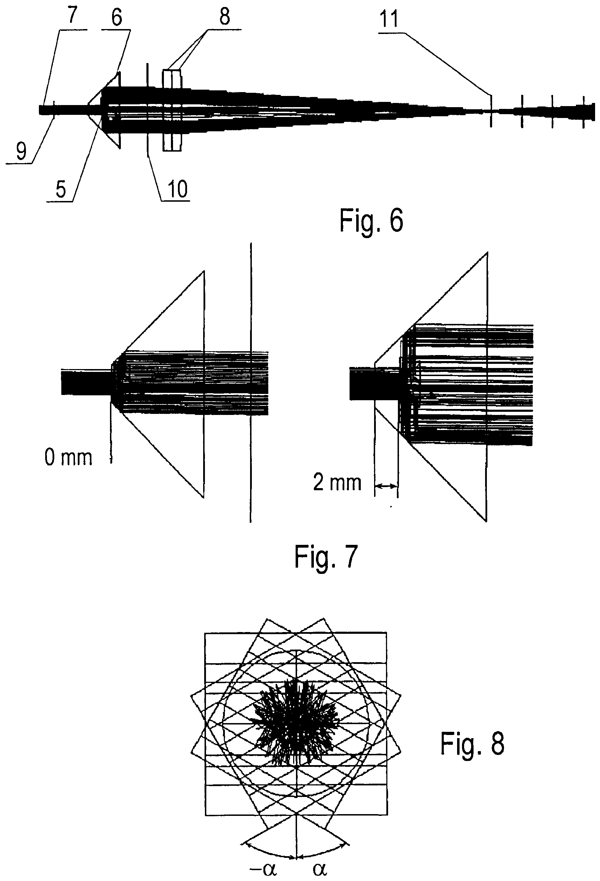

To provide the ring-shaped ellipse of the heat spot a lens system is used, which is schematically shown in Fig.6 and consists, in particular, of two mirror cones: an internal cone 5 (referred to as "axicon") and a truncated external cone 6.

Fig.7 shows that the diameter of the resulting ring-shaped beam changes as a function of the position of the axicon 6 relative to the external cone 5. For example, in the embodiment shown in Fig.6 if vertexes of the cones are in the same plane (i.e. the distance between them is 0 mm), the outer diameter of the section of the ring-shaped beam emitted from the cone 6 will be 8 mm. Accordingly, if the distance is 2 mm, the diameter is 12 mm, and with the distance of 4 mm the diameter is 16 mm. The system may also comprise a pair of cylindrical lens 8, one of which compresses the ring-shaped beam in one plane, and the other lens does the same in the other plane thereby changing the size of the axes of the ring-shaped ellipse. Fig.8 shows that mutual rotation of the cylindrical lenses 8 (changing angle $\alpha$) modifies the

shape of the heat spot. The illustrated system further comprises: a source detector 9, an axicon detector 10, and a focus detector 11.

Use of a system with the system of lenses: a coaxial conical lens which transforms a beam having a solid section into a beam having a ring-shaped section, and a cylindrical lens which stretches the ring to an ellipse, provides simultaneously a ring-shaped and elongated laser beam in the direction of movement of the glass object and/or beam. However, one skilled in the art would appreciate that other embodiments of the optical system for transforming the laser beam to elliptical and ring shape are possible.

As noted, glass transition temperature Tg for most commercial glasses ranges within 400-600°C. In accordance with the invention, heating is preferably provided to a temperature of 650-680°C, followed by cooling with a liquid/air mixture.

At a more intense heating of the surface, evaporation (sublimation of the material) may occur; hence the acceptable range is: over the glass transition temperature and below the evaporation temperature.

Hereinafter an exemplary embodiment of producing a chamfer at the glass edge will be described.

Tests were carried out with Synrad firestar f100W laser, available from Synrad, having laser power W = 100 watts; laser beam moving speed was V = 0.6-0.9 m/min; resulting heat spot had the shape of an annular ellipse of size S = 3 x 11 mm (the spot size was taken as a function of the laser power; at a higher power the spot may be increased along the major axis).

The laser beam, whose heat spot was a ring-shaped ellipse having the major axis of 11 mm and the minor axis of 3 mm, was directed onto the glass edge to be chamfered at an angle of 45° (or some other angle from 45+30° to 45-15°) and moved along a straight line at a constant speed and constant focal distance.

Upon heating the glass 1 surface with the laser beam 2, the laser energy was absorbed in a thin surface layer, as the glass was opaque for the laser beam. Therefore, the laser energy passed further into the depth of the material by thermal conduction.

In this case, when the tensile stress exceeds the strength of the glass, a narrow strip of glass is separated from the glass edge, i.e. chip is removed from the edge to form a chamfer. Local effect of the laser on the glass surface allows melting the glass material in the exposure region and rounding the glass edge without simultaneously melting the rest of the glass material, which could otherwise cause deformation of the glass near the treated edges.

The extent of heating the glass surface exposed to laser radiation depends on the following factors: power and power density w (watts/sq cm) of laser radiation, speed of relative movement of the laser beam and/or glass, exposure time $\tau$ (s), and speed of heat dissipation from the surface into the depth of glass, which is defined by the thermal conductivity factor_of glass. The same characteristics also determine the chamfer size, which is also set by the size of the minor axis of the heat spot ellipse. The chamfer size can range from a few hundredths of a millimeter to several millimeters. Furthermore, the angle of inclination of the chamfer relative to the surface of the glass, which depends on the angle at which the axis of the laser beam is directed to the treated glass surface, can be varied.

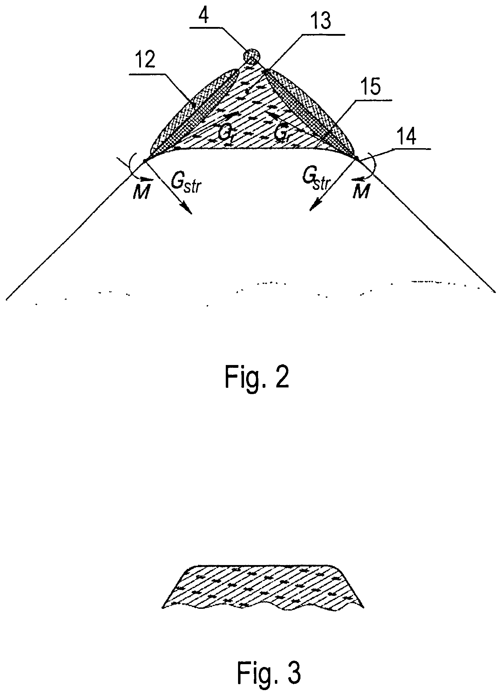

Fig.2 shows schematically processes occurring in the edge in the course of treatment with a ring-shaped laser beam in accordance with the invention.

As seen in this Figure, heating gives rise to portions of expanded glass formed in areas 12 adjacent to the glass edge 4, between which a hardened glass portion 13 is formed. With this the following stresses are acting at the microcrack rounding site 14: bending moment M, thermal stress $G_{из}$ caused by bending, and thermal stress Gr caused by cooling. Glass material separates along the microcrack trajectory 15.

Fig.3 illustrates in sectional view that the resulting chamfer has rounded edges owing to the present method.

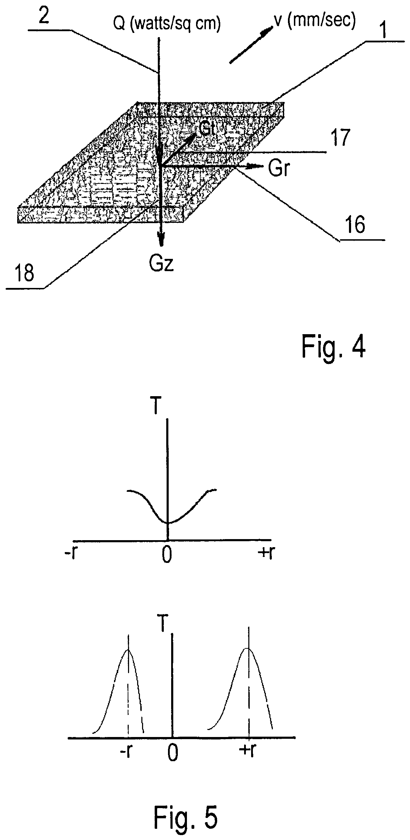

Fig.4 shows schematically thermal stresses arising in the glass treated with a laser beam at surface absorption. It is shown for simplicity that the laser beam 2 is directed vertically to the elementary fragment of the heated area of glass 1. The following thermal stresses arise in the glass:

Gr - radial thermal stresses 16 arising when the beam goes away from the heating area and the area is cooled; they cause the development of brittle fracture process at "hardened portion"/glass bulk interface and formation of cracks;
Gt - tangent thermal stresses 17; they are directed along the crack propagation line; the impact of these thermal stresses must be reduced because they degrade the quality of edges of separated surfaces;
Gz - coaxial thermal stresses 18; they do not generally affect the brittle fracture process and can be neglected.

Conditions for chamfering a sharp edge are:

$$T_{H} > T_g > T_{\Delta}$$

$$G_t > G_{str}$$

where:

$T_H$ - temperature of glass in the heat spot area
$T_{\Delta}$ - ultimate thermal resistance
$T_g$ - glass transition temperature
$G_t$ - thermal stresses created in glass
$G_{str}$ - ultimate tensile strength of glass;

$T_g$ and $T_\Delta$ are characteristics of given type of glass, which are taken from reference books; $T_\Delta$ can be calculated by the formula

$$T_\Delta = G_{str} \cdot (1 - \gamma)/\alpha \cdot E$$

where:

$\alpha$ - ultimate tensile strength
$\gamma$ - thermal expansion factor
E - Young's modulus.

To provide stable and qualitative process of chamfering it is necessary to ensure the condition:

$$G_t/G_{str} > 1 \qquad (1).$$

This condition can be achieved by specifying the desired basic characteristics of the process:

power density in the heat spot, watts/sq mm;
laser beam exposure time dr (mm)/v (mm/sec);
shape of heat spot;
intensity, temperature and direction of coolant stream.

Analysis of condition (1) leads to the conclusion that $r^2$.dT/dr, i.e. the temperature from the cutting axis must increase (since dT/dr > 0).

Comparative graphs shown in Fig.5 demonstrate that a ring is the best shape of the spot to provide thermal cleavage, with the shape of an ellipse being preferred.

Tests of the present method resulted in the following conclusions:

1. By increasing the laser power up to 100-400 watts and setting a minimum required size of the chamfer (the smaller the chamfer, the faster treatment) on the basis of economic efficiency, commercially significant speeds of treatment (up to several m/min) can be achieved.
2. Sufficiently stable treatment process was observed at precise movement of heat spot along the glass end. With this the chamfer size was constant throughout the length of treatment.
3. Upon laser cutting, the glass end was chamfered with high quality.
4. The method can be used for treatment of glass prior to quenching (especially for glass panes more than 6 mm thick), for contour processing to improve the quality of edges without grinding and polishing, and thereby increase the glass object strength by not less than 30%, including display glass.

Preferably, the laser beam is directed so that its axis lies at an angle of 20-70° to the plane, which is a continuation of the glass surface facing the laser beam.

The angle is preferably disposed in the plane perpendicular to the vector of said movement of the glass object and/or beam. However, the axis of the laser beam can be directed at an angle of 0-30° to the plane perpendicular to the vector of movement of the glass and/or beam.

According to the invention, the treatment is most preferably carried out with a laser beam having the shape of a ring elongated in the direction of movement of the glass object and/or beam to obtain a heat spot in the shape of an elongated ring, for example, an elongated ellipse, which enhances the efficiency of chamfering process. The possibility of rotating the elliptical beam with respect to the direction of movement should be provided.

The chamfer size is specified by the size of the minor axis of the heat spot, the power density in the heat spot w (watts/sq cm), and exposure time $\tau$ (s).

After processing the edge of the object a coolant is preferably fed in the heating area to locally cool the heating area.

Those skilled in the art will appreciate that the invention is not limited to the embodiments described above, and that modifications may be made within the scope of the claims presented below.

## Claims

1. A method of blunting sharp edges of glass objects, comprising treating the glass edge with a focused laser beam, while relatively moving the glass object and/or the beam, wherein said treating comprises heating the glass edge with the laser beam to a temperature above glass transition temperature, T > Tg, **characterized in that** said treating of the glass edge is carried out with the laser beam having a ring-shaped section.

2. The method according to claim 1, wherein said laser beam is directed to the glass edge so that its axis is disposed at an angle of 20-70° to the plane which is a continuation of the glass surface facing the laser beam.

3. The method according to claim 2, wherein said angle lies in the plane perpendicular to the vector of movement of the glass object and/or beam.

4. The method according to claim 2, wherein the axis of the laser beam is directed at an angle of 0-30° to the plane perpendicular to the vector of movement of the glass object and/or beam.

5. The method according to claim 1, wherein said treating is carried out with a laser beam having the shape of a ring elongated in the direction of movement of

**EP 3 036 203 B1** 10

said glass object and/or beam to produce a heat spot in the shape of an elongated ring.

6. The method according to claim 1 or 5, wherein said treating with a laser beam comprises removing the glass material in the form of chip to chamfer the glass edge.

7. The method according to claim 6, wherein the size of the chamfer is defined by the minor axis of the heat spot, radiation power density at the heat spot W (watts/sq cm), and exposure time τ (s).


**Patentansprüche**

1. Verfahren zur Glättung scharfer Kanten von Glasgegenständen, wobei das Verfahren das Behandeln der Glaskante mit einem fokussierten Laserstrahl umfasst, während sich der Glasgegenstand und/oder der Strahl relativ bewegt, wobei das Behandeln ein Erwärmen der Glaskante mit dem Laserstrahl auf eine Temperatur oberhalb der Glasübergangstemperatur, T > T$_g$, umfasst, **dadurch gekennzeichnet, dass** das Behandeln der Glaskante mit dem Laserstrahl, der einen ringförmigen Abschnitt aufweist, ausgeführt wird.

2. Verfahren nach Anspruch 1, wobei der Laserstrahl auf die Glaskante derart ausgerichtete ist, dass seine Achse gegenüber der Ebene, die eine Fortsetzung der dem Laserstrahl zugewandten Glasoberfläche ist, in einem Winkel von 20-70° angeordnet ist.

3. Verfahren nach Anspruch 2, wobei der Winkel in der Ebene liegt, die senkrecht zu dem Vektor der Bewegung des Glasgegenstands und/oder des Strahls ist.

4. Verfahren nach Anspruch 2, wobei die Achse des Laserstrahls unter einem Winkel von 0-30° auf die Ebene gerichtet ist, die senkrecht zu dem Vektor der Bewegung des Glasgegenstands und/oder des Strahls ist.

5. Verfahren nach Anspruch 1, wobei das Behandeln mit einem Laserstrahl ausgeführt wird, der die Form eines Rings aufweist, der in der Richtung einer Bewegung des Glasgegenstands und/oder des Strahls langgestreckt ist, um einen Wärmepunkt in der Form eines langgestreckten Rings zu erzeugen.

6. Verfahren nach Anspruch 1 oder 5, wobei das Behandeln mit einem Laserstrahl ein Entfernen des Glasmaterials in der Form von Chips umfasst, um die Glaskante abzukanten.

7. Verfahren nach Anspruch 6, wobei die Größe der Abkantung durch die kleinere Achse des Wärmepunkts, durch die Strahlungsleistungsdichte an dem Wärmepunkt W (Watt/cm$^2$) und durch die Aussetzungszeit τ (s) definiert ist.


**Revendications**

1. Procédé d'émoussement de bords tranchants d'objets en verre, comprenant le traitement du bord tranchant avec un faisceau laser focalisé, tout en déplaçant de manière relative l'objet en verre et/ou le faisceau, dans lequel ledit traitement comprend le chauffage du bord de verre avec le faisceau laser à une température supérieure à la température de transition vitreuse, T > Tg,
**caractérisé en ce que**
ledit traitement du bord en verre est réalisé avec le faisceau laser présentant une section annulaire.

2. Procédé selon la revendication 1, dans lequel ledit faisceau laser est dirigé vers le bord de verre de manière à ce que son axe soit disposé selon un angle de 20-70° par rapport au plan constituant une prolongation de la surface de verre tournée vers le faisceau laser.

3. Procédé selon la revendication 2, dans lequel ledit angle se situe dans le plan perpendiculaire au vecteur de déplacement de l'objet en verre et/ou du faisceau.

4. Procédé selon la revendication 2, dans lequel l'axe du faisceau laser est dirigé selon un angle de 0-30° par rapport au plan perpendiculaire au vecteur de déplacement de l'objet en verre et/ou du faisceau.

5. Procédé selon la revendication 1, dans lequel ledit traitement est réalisé avec un faisceau laser présentant la forme d'un anneau allongé dans la direction de déplacement dudit objet en verre et/ou dudit faisceau pour produire un point de chaleur en forme d'anneau allongé.

6. Procédé selon la revendication 1 ou 5, dans lequel ledit traitement au faisceau laser comprend le retrait du matériau en verre sous la forme de copeaux pour chanfreiner le bord de verre.

7. Procédé selon la revendication 6, dans lequel la taille du chanfrein est définie par l'axe mineur du point de chaleur, la densité de la puissance de rayonnement au niveau du point de chaleur W (watts/cm$^2$), et le temps d'exposition τ (s).

Fig. 1

Fig. 2

Fig. 3

Fig. 4

Fig. 5

EP 3 036 203 B1

Fig. 6

0 mm

2 mm

Fig. 7

Fig. 8

−α    α

10

# EP 3 036 203 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03015976 A1
- KR 100820689 B
- US 6407306 B1
- RU 2163226 C1